# EUROPÄISCHE PATENTSCHRIFT

(11) **EP 1 690 989 B1**
(45) Veröffentlichungstag und Bekanntmachung des Hinweises auf die Patenterteilung: **17.08.2016**
(21) Anmeldenummer: 05011453.7
(22) Anmeldetag: 27.05.2005
(51) Int. Cl.: E03F 1/00

(54) **Versickerungsvorrichtung**
Infiltration device
Dispositif d'infiltration

(30) Priorität: 11.02.2005 DE 102005006202
(43) Veröffentlichungstag der Anmeldung: 16.08.2006
(73) Patentinhaber: REHAU AG + Co, 95111 Rehau (DE)
(72) Erfinder: Schön, Andreas, 15738 Zeuthen (DE); Talaron, Dietrich, 91077 Neunkirchen (DE); Baumann, Warnfried, 91315 Höchstadt (DE); Wichtrei, Thomas, 36433 Bad Salzungen (DE)

(56) Entgegenhaltungen:
- EP-A- 0 924 356
- EP-A- 0 943 737
- EP-A- 1 260 640
- WO-A-2005/040501
- DE-C1- 10 143 985

## Beschreibung

Die Erfindung betrifft eine Versickerungssvorrichtung, vorzugsweise für ein unterirdisch zu verlegendes Rigolensystem gemäss dem Oberbegrift des Anspruchs 1.

Zur Zwischenspeicherung und Versickerung von Regenwasser werden in der Praxis häufig Versickerungsvorrichtungen, z.B. sog. Rigolen eingesetzt, die ein hohes Speichervolumen bieten und ermöglichen, dass der darüber liegende Platz genutzt werden kann (z.B. als Fahrbahn oder als Abstellfläche für PKW). Dazu wird das aus einem Dachablauf eines Hauses anfallende Regenwasser nach einer Vorreinigung in die Versickerungsvorrichtung eingeleitet. Versickerungsvorrichtungen bestehen beispielsweise aus einer Kiespackung mit Verteilrohr, aus reinen Füllkörpern oder aus Füllkörpern mit Verteilrohr. Trotz eines i.d.R. vorgeschalteten Vorfilters ist es nicht auszuschließen, dass Verschmutzungen in die Versickerungsvorrichtung gelangen. Die Versickerleistung der Versickerungsvorrichtung kann aufgrund der Verschmutzung im Laufe der Zeit abnehmen, d.h. dass die Funktion der Versickerungsvorrichtung eingeschränkt wird.

Eine Versickerungsvorrichtung der eingangs genannten Art, im Speziellen eine Rigoleneinheit, welche im Wesentlichen als Hohlkörper ausgebildet ist, ist beispielsweise aus der EP 1 260 640 A1 bekannt. Diese Rigoleneinheit umfasst eine Basiswandung sowie eine Mehrzahl von Verbindungswandungen, welche von der Basiswandung abstehen, wobei zumindest ein Teil dieser Wandungen für Flüssigkeiten durchlässig ist. Zum Einleiten des zu versickernden Regenwassers ist ein gitterartiger Inspektionskanal vorgesehen, der sich über einen großen Teil der Höhe der Rigoleneinheit erstreckt und an seinen beiden Längsenden offen ist. Grober Schmutz soll in dem als Sieb wirkenden Inspektionskanal zurückgehalten werden. Mit spezieller Ausrüstung und unter Hochdruck ist eine Reinigung des Inspektionskanals möglich.

Bei der bekannten, gattungsgemäßen Rigoleneinheit ergibt sich das Problem, dass die sich im Regenwasser ansammelnden Schwebstoffe ungehindert durch die Öffnungen des Inspektionskanals dringen, und dass beim Reinigen des Inspektionskanals unter Hochdruck auch gröberer Schmutz durch die Öffnungen des Inspektionskanals gespült wird, was mit der Zeit zu einer innenseitigen Feinteileinlagerung in der Rigoleneinheit führt. Durch die Feinteileinlagerung in der Rigoleneinheit nimmt deren Versickerleistung im Laufe der Zeit spürbar ab.

Der Erfindung liegt die Aufgabe zugrunde, die aus dem Stand der Technik bekannten Nachteile zu beseitigen und insbesondere eine Versickerungsvorrichtung mit sehr hoher Versickerleistung und einem sehr hohen Speicherkoeffizienten bereit zu stellen, die im Vergleich zu herkömmlichen Versickerungsvorrichtungen eine effektive Isolierung von Grob- und Feinschmutz ermöglicht und leicht gereinigt werden kann.

Diese Aufgabe wird gelöst durch eine Versickerungsvorrichtung gemäss Anspruch 1. Die Absetzeinrichtung funktioniert nach dem Prinzip eines Abscheiders. Das zu versickernde Fluid, beispielsweise Regenwasser, wird nicht unmittelbar beim Einleiten in die Versickerungsvorrichtung versickert, sondern zunächst im Absetzabschnitt aufgestaut. Der noch im Fluid enthaltene Schmutz oder die im Fluid enthaltenen Schwebstoffe setzen sich im Absetzabschnitt unter Einwirkung der Schwerkraft ab. Erst zeitverzögert läuft das von den Schwebstoffen gereinigte Fluid zur Versickerung über den Aus- oder Überlaufabschnitt ab, während der Schmutz und die Schwebstoffe im Absetzabschnitt zurück bleiben. Zur Reinigung der Versickerungsvorrichtung wird lediglich der Absetzabschnitt durchspült, und das Spülwasser wird mitsamt der zuvor im Absetzabschnitt abgesetzten Schwebstoffe in einen Reinigungsschacht gespült und dort abgesaugt. Somit gelangen erheblich weniger Schwebstoffe in das von dem Strukturkörper frei gehaltene Volumen, und die bestimmungsgemäße Versickerleistung der erfindungsgemäßen Versickerungsvorrichtung kann über lange Zeit aufrechterhalten werden.

In einer vorteilhaften Ausführungsform bildet der Absetzabschnitt den Boden der Absetzeinrichtung. Die abgesetzten Schwebstoffe sammeln sich bevorzugt am Boden der Absetzeinrichtung an und können von dort mühelos entfernt werden. Die Reinigung und Säuberung der Versickerungsvorrichtung wird dadurch ermöglicht.

Die bestimmungsgemäße Versickerleistung der Versickerungsvorrichtung kann noch länger aufrechterhalten werden, wenn der Absetzabschnitt im Wesentlichen fluidundurchlässig ist. So können auch feinste, im Fluid enthaltene Schwebstoffe nicht in das vom Strukturkörper frei gehaltene Versickervolumen gelangen.

Um in Abhängigkeit der Stauhöhe des in der Absetzeinrichtung aufgestauten Fluides eine zunehmende Ablaufgeschwindigkeit zu erreichen, weist die Absetzeinrichtung Öffnungen in zumindest zwei Öffnungsreihen auf, die auf unterschiedlicher Stauhöhe bzw. in unterschiedlichem Abstand vom Boden der Absetzeinrichtung, gemessen entgegen der Kraftrichtung der Schwerkraft, angeordnet sind. Bei Erreichen einer ersten Stauhöhe läuft das zu versickernde Fluid über die erste Öffnung bzw. die erste Öffnungsreihe ab. Wenn mehr Fluid zufließt als über die erste Öffnung bzw. die erste Öffnungsreihe abläuft, beispielsweise bei starkem Regenfall, steigt der Fluidpegel in der Absetzeinrichtung weiter an. Bei Erreichen einer zweiten Stauhöhe fließt das Fluid zusätzlich über die zweite Öffnung bzw. die zweite Öffnungsreihe ab. So können unterschiedliche Überlaufzonen innerhalb der Absetzeinrichtung ausgestaltet werden.

Um in Abhängigkeit der Stauhöhe des in der Absetzeinrichtung aufgestauten Fluides eine besonders stark zunehmende Ablaufgeschwindigkeit zu erreichen, ist es von Vorteil, wenn die Öffnungen bzw. die Öffnungsreihen bei zunehmender Stauhöhe, d.h. mit zunehmendem Abstand vom Boden der Absetzeinrichtung, eine größere Öffnungsfläche aufweisen.

Um das gesamte Versickervolumen der Versickerungsvorrichtung vollständig und gleichmäßig auszunutzen ist es von Vorteil, wenn der Überlaufabschnitt zumindest zwei Öffnungen aufweist, die um den Umfang der Absetzeinrichtung im gleichen Abstand vom Boden der Absetzeinrichtung in etwa gleichmäßig verteilt sind.

Das vom Strukturkörper frei gehaltene Versickervolumen kann optimal ausgenutzt werden, wenn die Absetzeinrichtung in Längsrichtung des Strukturkörpers angeordnet ist.

Ein besonders einfach zu transportierendes und aufzubauendes Ausführungsbeispiel der erfindungsgemäßen Versickervorrichtung zeichnet sich dadurch aus, dass die Außenseiten des Strukturkörpers mit im Wesentlichen rechteckigen oder quadratischen Abdeckelementen abgedeckt sind.

Um Rigolensysteme, die aus einer Vielzahl von Versickerungsvorrichtungen zusammengesetzt werden, besonders platzsparend und besonders stabil gestalten zu können, ist es hilfreich, wenn die Länge des Strukturkörpers im Wesentlichen gleich der Breite oder gleich einem ganzzahligen Vielfachen der Breite des Strukturkörpers ist.

Gleichermaßen ist es dazu von Vorteil, wenn die Länge des Strukturkörpers im Wesentlichen gleich der Höhe oder gleich einem ganzzahligen Vielfachen der Höhe des Strukturkörpers ist.

Darüber hinaus ist es zu diesem Zweck von Vorteil, wenn die Breite des Strukturkörpers im Wesentlichen gleich der Höhe oder gleich einem ganzzahligen Vielfachen der Höhe des Strukturkörpers ist, bzw. wenn die Höhe des Strukturkörpers gleich der Breite oder gleich einem ganzzahligen Vielfachen der Breite des Strukturkörpers ist.

Um ein Eindringen des umliegenden Erdreiches in das vom Strukturkörper frei gehaltene Versickervolumen zu verhindern, ist es von Vorteil, wenn der Strukturkörper an der Außenseite völlig oder zumindest abschnittsweise mit Vlies verkleidet ist.

Die wesentlichen Merkmale der Erfindung und insbesondere bevorzugte Ausführungsbeispiele derselben werden nachstehend mit Bezug auf die beiliegenden Zeichnungen beschrieben.

### Kurze Beschreibung der Zeichnungen

- Fig. 1: zeigt eine herkömmliche, unterirdisch angeordnete Versickerungsvorrichtung,
- Fig. 2: zeigt eine erfindungsgemäße, unterirdisch angeordnete Versickerungsvorrichtung,
- Fig. 3: zeigt zwei übereinander liegende Strukturkörper mit innen liegenden Absetzeinrichtungen zur Veranschaulichung des Wirkungsprinzips einer erfindungsgemäßen Versickerungsvorrichtung,
- Fig. 4: zeigt schematisch das Wirkungsprinzip einer erfindungsgemäßen Versickerungsvorrichtung,
- Fig. 5: zeigt schematisch eine erfindungsgemäße Versickerungsvorrichtung in einer Explosionsdarstellung,
- Fig. 6: zeigt eine vollständig montierte, erfindungsgemäße Versickerungsvorrichtung,
- Fig. 7: zeigt ein Beispiel eines Rigolensystems mit mehreren erfindungsgemäßen Versickerungsvorrichtungen,
- Fig. 8: zeigt ein weiteres Beispiel eines weiteren Rigolensystems mit mehreren erfindungsgemäßen Versickerungsvorrichtungen,
- Fig. 9: zeigt schematisch eine platzsparende, ineinander verschachtelte Anordnung von Strukturkörpern der erfindungsgemäßen Versickerungsvorrichtung zum Transport oder zur Lagerung,
- Fig. 10: zeigt schematisch eine platzsparende, ineinander verschachtelte Anordnung von Absetzeinrichtungen der erfindungsgemäßen Versickerungsvorrichtung zum Transport oder zur Lagerung.

### Detaillierte Beschreibung der Zeichnungen

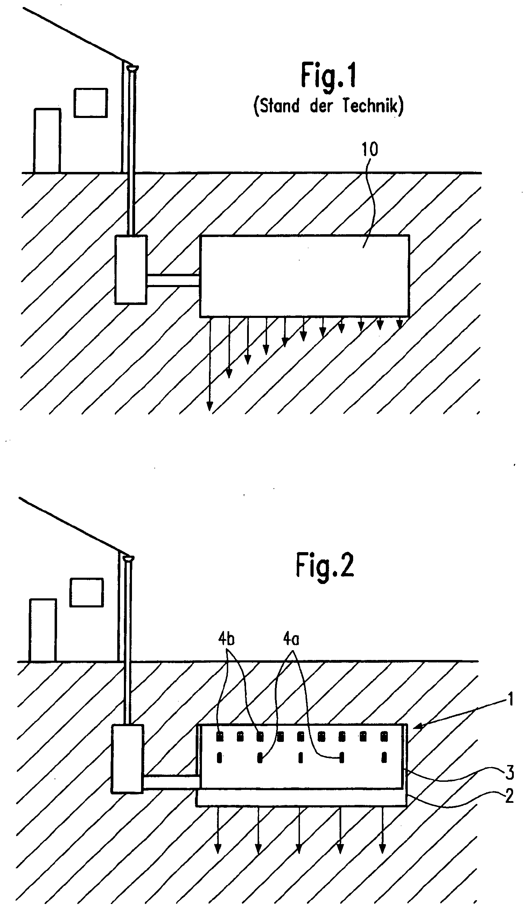

Figur 1 zeigt schematisch eine herkömmliche Versickerungsvorrichtung 10 für ein unterirdisch zu verlegendes Rigolensystem mit einem hohlen und fluiddurchlässigen Strukturkörper, der ein Volumen im Erdreich freihält, in welchem Regenwasser zwischengespeichert und zur Versickerung hindurchgeleitet wird. Die herkömmliche Versickerungsvorrichtung 10 ist beispielsweise an einen Regenablauf eines Hauses angeschlossen. Über eine Vorreinigungsstufe wird das in einer Regenrinne angesammelte Regenwasser in die Versickerungsvorrichtung 10 eingeleitet.

Im Bereich der Regenwassereintrittsöffnung versickert der Großteil des eingeleiteten Regenwassers in das umliegende Erdreich. Mit zunehmendem Abstand von der Regenwassereintrittsöffnung versickert immer weniger Wasser in das umliegende Erdreich, da das zu versickernde Fluid die hinteren Bereiche der Versickerungsvorrichtung 10 gar nicht erst erreicht.

Figur 2 zeigt schematisch eine erfindungsgemäße Versickerungsvorrichtung 1, die unterirdisch in der Nähe eines Hauses verlegt ist und an den Regenablauf des Hauses angeschlossen ist. Die erfindungsgemäße Versickerungsvorrichtung 1 weist den im Wesentlichen hohlen und zumindest abschnittsweise fluiddurchlässigen Strukturkörper 2 auf, der dafür vorgesehen ist, ein Volumen im Erdreich freizuhalten, durch welches ein zu versickerndes Fluid, vorzugsweise das im Regenablauf des Hauses angesammelte Regenwasser, zur Zwischenspeicherung und zur Versickerung hindurchleitbar ist. Der Strukturkörper 2 kann theoretisch jede beliebige Form aufweisen und theoretisch aus jedem beliebigen Material bestehen. Vorzugsweise besteht der Strukturkörper 2 aus einem witterungsbeständigen Material. In dem von dem Strukturkörper 2 freigehaltenen Volumen ist eine Absetzeinrichtung 3 zum Absetzen der im Fluid enthaltenen Schwebstoffe angeordnet. Die Absetzeinrichtung 3 ist im beschriebenen Beispiel eine längliche Wanne mit U-Profil und umfasst einen vorzugsweise als Mulde, Rinne oder Senke ausgebildeten Absetzabschnitt zum Aufstauen des zu versickernden Fluides und einen Auslaufabschnitt bzw. Überlaufabschnitt 4, über den das aufgestaute Fluid zur Versickerung ablaufen kann.

Die Absetzeinrichtung 3 ist mit Öffnungen 4a versehen, die in einer oder mehreren Öffnungsreihen etwa auf gleicher Höhe - gemessen entgegen der Kraftrichtung der Schwerkraft - über dem Boden der Absetzeinrichtung 3 liegen und durch ihre Lage eine erste Ebene definieren. Genauer gesagt schneiden sämtliche Öffnungen 4a die erste Ebene, die sie durch ihre Lage definieren. Diejenigen, die Öffnungsreihen 4a bildenden Öffnungen sind vorzugsweise gleichmäßig über die Länge und/oder Breite der Absetzeinrichtung 3 verteilt und finden sich vorzugsweise an sämtlichen Seitenwänden der Absetzeinrichtung 3. Über die Öffnungen 4a kann das zu versickernde Fluid bei Erreichen einer bestimmten, ersten Stauhöhe gleichzeitig und gleichmäßig in das vom Strukturkörper 2 freigehaltene Volumen ablaufen. So kann die in Fig. 2 durch Pfeile symbolisierte gleichmäßige Versickerung erreicht werden. Um einen starken Fluidzulauf bewältigen zu können und/oder um mit zunehmender Stauhöhe eine ansteigende Überlaufgeschwindigkeit zu erreichen, können zusätzliche Öffnungen bzw. Öffnungsreihen vorgesehen sein

Diese zusätzlichen Öffnungen bilden vorzugsweise weitere Öffnungsreihen, sind vorzugsweise gleichmäßig über die Länge und/oder Breite der Absetzeinrichtung 3 verteilt und definieren durch ihre Lage vorzugsweise weitere, zur ersten Ebene parallele Ebenen, wie beispielsweise die Öffnungen der Öffnungsreihen 4b, die durch ihre Lage eine zur ersten Ebene in etwa parallele, zweite Ebene definieren. Die von den unterschiedlichen Öffnungen definierten, unterschiedlichen Ebenen verlaufen vorzugsweise in unterschiedlichem Abstand vom Boden der Absetzeinrichtung 3, gemessen entgegen der Kraftrichtung der Schwerkraft, in etwa parallel zueinander. Die Stauhöhe des Fluides im Absetzabschnitt hängt von der Menge und Geschwindigkeit des zulaufenden Fluides ab. Ist die Versickerungsvorrichtung 1 bestimmungsgemäß verlegt, so erreicht das sich aufstauende Fluid gleichzeitig mit der ersten Stauhöhe alle die erste Ebene definierenden Öffnungen der Öffnungsreihen 4a und gleichzeitig mit der zweiten Stauhöhe alle die zweite Ebene definierenden Öffnungen der Öffnungsreihe 4b, und läuft gleichzeitig und gleichmäßig über die Öffnungsreihen 4a bzw. 4b ab. Bei bestimmungsgemäßer Verlegung der Versickerungsvorrichtung 1, im Speziellen der Absetzeinrichtung 3, verläuft die Kraftrichtung der Schwerkraft in etwa senkrecht zum Boden der Absetzeinrichtung 3 und in etwa senkrecht zu den ersten und zweiten, etc. Ebenen.

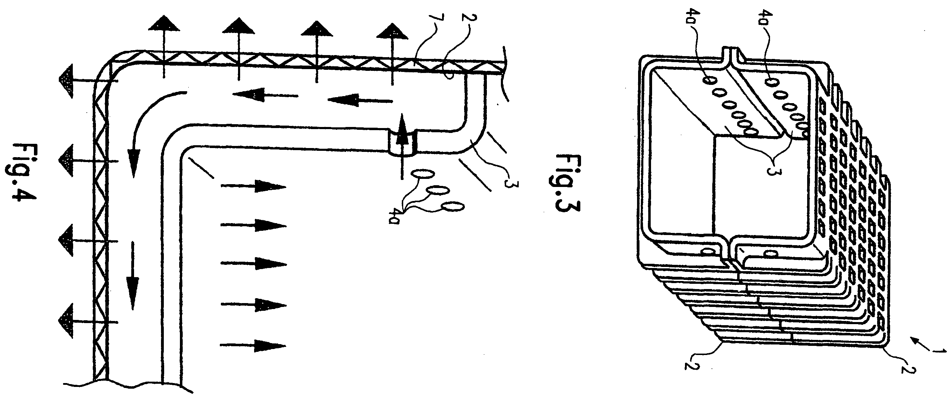

Figur 3 zeigt zwei übereinander liegende Strukturkörper 2 mit innenliegenden Absetzeinrichtungen 3 zur Veranschaulichung des Wirkungsprinzips der erfindungsgemäßen Versickerungsvorrichtung 1. Jeder Strukturkörper 2 ist im Wesentlichen U-förmig und an den Seitenwänden mit Rippen verstärkt. Durch derartige Verstärkungselemente wird der unterirdisch verlegte Strukturkörper 2 soweit verstärkt, dass die Erdoberfläche oberhalb der Versickerungsvorrichtung 1 stark belastet, und z.B. als Fahrbahn oder als Abstellfläche für Pkw benutzt werden kann. Innerhalb der Strukturkörper 2 sind die als Wannen ausgebildeten Absetzeinrichtungen 3 angeordnet. Die Seitenwände der Wannen 3 sind mit den Öffnunggen bzw. Öffnungsreihen 4a versehen.

Figur 4 zeigt schematisch das Wirkungsprinzip der erfindungsgemäßen Versickerungsvorrichtung 1 in einem vergrößerten Ausschnitt der Figur 3. Der Strukturkörper 2 ist an der Außenseite mit Vlies 7 verkleidet, um ein Eindringen des umliegenden Erdreichs in das vom Strukturkörper 2 freigehaltene Volumen zu verhindern. Das Vlies 7 kann beispielsweise an ein Gitter an der Außenseite des Strukturkörpers 2 angelehnt sein. Das Wirkungsprinzip der erfindungsgemäßen Versickerungsvorrichtung 1 wird weiter unten ausführlich beschrieben.

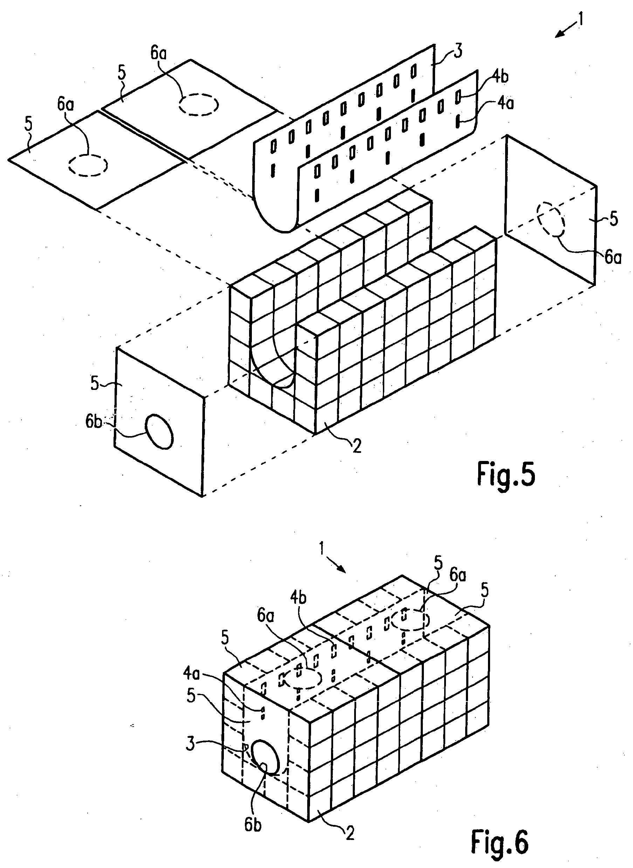

Die Figuren 5 bis 9 zeigen ein bevorzugtes Ausführungsbeispiel der erfindungsgemäßen Versickerungsvorrichtung 1. Der Strukturkörper 2 wird der Einfachheit halber nur symbolisch - als Gitterstruktur - dargestellt.

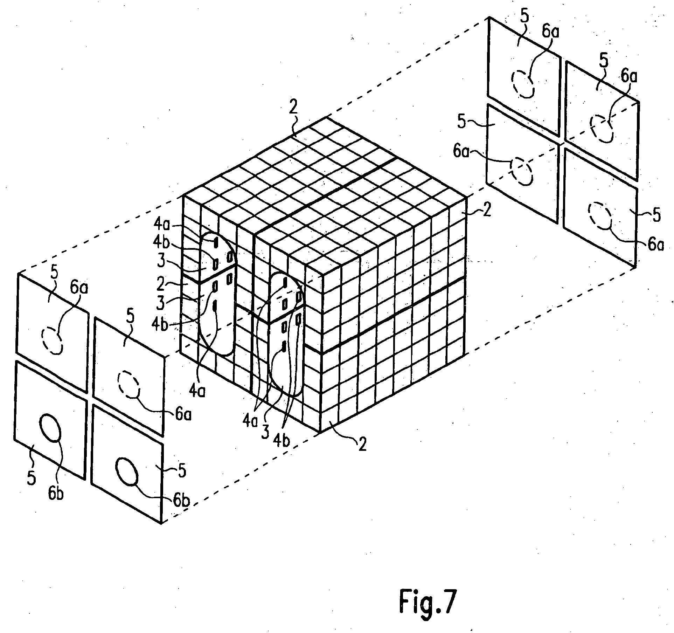

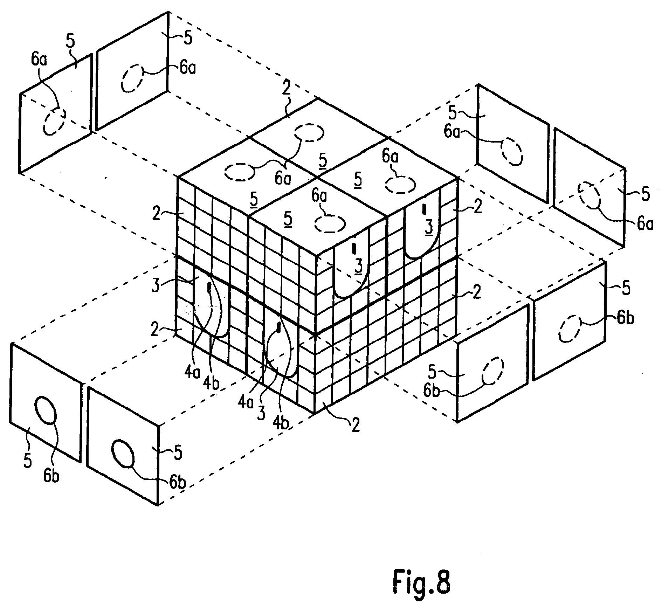

Der im Wesentlichen quaderförmige Strukturkörper 2 ist in etwa ebenso hoch wie bereit, vorzugsweise ca. 0,4 m, und etwa doppelt so lang wie hoch bzw. breit, vorzugsweise ca. 0,8 m. Dadurch können mehrere Strukturkörper 2 zu sehr kompakten Rigolensystemen zusammengefügt werden, wie in den Figuren 7 und 8 veranschaulicht wird.

Die Absetzeinrichtung 3 der erfindungsgemäßen Versickerungsvorrichtung 1 ist als Wanne mit einem endseitig offenen U-Profil ausgebildet und erstreckt sich in etwa über die volle Länge und Höhe des Strukturkörpers 2. Die Absetzeinrichtung 3 ist in einem entsprechend dafür vorgesehenen und entsprechend bemessenen Freiraum des Strukturkörpers 2 aufgenommen. Der gekrümmte Boden der Absetzeinrichtung 2, der in etwa die Form eines Halbrunds beschreibt, wird nachstehend als Absetzabschnitt bezeichnet. Der mit den Öffnungen bzw. den Öffnungsreihen 4a und 4b versehene (vertikale) Bereich an den Seitenwänden der Absetzeinrichtung 3, oberhalb des Absetzabschnitts, wird nachstehend als Überlaufabschnitt bezeichnet.

Die Öffnungen der Öffnungsreihen 4a sind in Längsrichtung der Absetzeinrichtung 3 an beiden Seitenwänden und über deren gesamte Länge jeweils in gleichmäßigem Abstand angeordnet. Alle Öffnungen der Öffnungsreihen 4a haben jeweils dieselbe Kontur und Öffnungsfläche befinden sich in etwa auf gleicher Höhe über dem Boden bzw. dem tiefsten Punkt der Absetzeinrichtung 3 und definieren durch ihre Lage die erste Ebene. Ebenso sind alle Öffnungen der Öffnungsreihen 4b in Längsrichtung der Absetzeinrichtung 3 an beiden Seitenwänden und über deren gesamte Länge jeweils in gleichmäßigem Abstand angeordnet und haben jeweils dieselbe Kontur und Öffnungsfläche. Alle Öffnungen der Öffnungsreihen 4b befinden sich in etwa auf gleicher Höhe über dem Boden bzw. dem tiefsten Punkt der Absetzeinrichtung 3 und definieren durch ihre Lage die zur ersten Ebene im Wesentlichen parallele zweite Ebene. Eine Öffnung einer Öffnungsreihe 4b hat vorzugsweise eine größere Öffnungsfläche als eine Öffnung einer Öffnungsreihe 4a. Zudem weist die Absetzeinrichtung 3 eine größere Anzahl an Öffnungen der Öffnungsreihen 4b auf als an Öffnungen der Öffnungsreihen 4a. Insgesamt ist die Gesamtöffnungsfläche der Öffnungen der Öffnungsreihen 4b größer als die Gesamtöffnungsfläche der Öffnungen der Öffnungsreihen 4a.

Generell nimmt die Anzahl und die Gesamtöffnungsfläche der jeweils eine Ebene definierenden Öffnungen mit zunehmendem Abstand vom Boden bzw. dem tiefsten Punkt der Absetzeinrichtung entgegen der Kraftrichtung der Schwerkraft zu, um bei steigendem Fluidpegel eine zunehmende Ablaufleistung zu erreichen.

Endseitig und oberseitig wird das Volumen des Strukturkörpers 2 mit den vorzugsweise fluidundurchlässigen Deckwänden 5 abgeschlossen. Die Deckwände 5 schließen auch die offenen Enden der als Wanne ausgebildeten Absetzeinrichtung 3 ab. Bei den Deckwänden 5 handelt es sich jeweils um identische Bauteile. In jeder Deckwand 5 ist eine kreisrunde Sollbruchstelle 6a vorgesehen, um eine Fluideintrittsöffnung 6b zum Einleiten des zu versickernden Fluides zu schaffen, die jedoch vorzugsweise nur bei einer endseitigen Deck(platte)wand 5 durchbrochen wird. Es liegt jedoch auch im Rahmen der Erfindung, dass die Deckwand 5 zumindest teilweise fluiddurchlässig ausgebildet ist.

Fig. 6 zeigt die erfindungsgemäße Versickerungsvorrichtung 1 mit montierten Deckplatten 5 und stirnseitiger Fluideintrittsöffnung 6b.

Fig. 7 zeigt ein Beispiel eines Rigolensystems, das aus insgesamt vier erfindungsgemäßen Versickerungsvorrichtungen 1 zusammengesetzt wird. Jeweils zwei Versickerungsvorrichtungen 1 liegen unmittelbar nebeneinander, und jeweils zwei Versickerungsvorrichtungen 1 liegen unmittelbar übereinander. Die übereinander liegenden Versickerungsvorrichtungen 1 sind in gleicher Längsrichtung ausgerichtet und so angeordnet, dass sich die Absetzeinrichtungen 3 entgegengesetzt gegenüber stehen. Durch die im Wesentlichen fluidundurchlässigen Deckplatten 5 sind die Versickerungsvorrichtungen 1 endseitig geschlossen.

Fig. 8 zeigt ein weiteres Beispiel eines Rigolensystems, bestehend aus einer in horizontaler Richtung besonders stabilen Anordnung mit insgesamt vier Versickerungsvorrichtungen 1. Die oberen zwei Versickerungsvorrichtungen 1 sind jeweils um 90° versetzt zu den unteren Versickerungsvorrichtungen 1 angeordnet. Diese orthogonale Anordnung zweier übereinander liegender Blocklagen erhöht die horizontale Druckbeständigkeit des Rigolensystems gegenüber der gleichgerichteten Anordnung übereinander liegender Blocklagen.

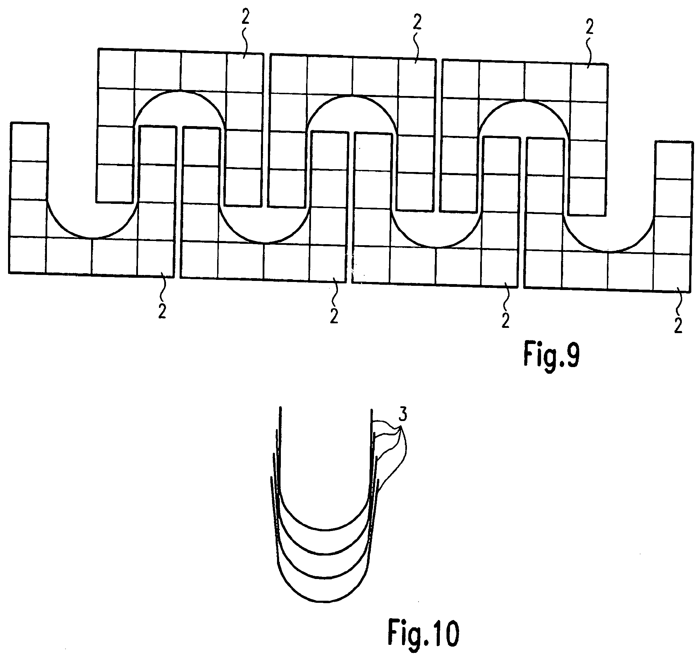

Fig. 9 zeigt eine platzsparende, ineinander verschachtelte Anordnung mehrerer Strukturkörper 2, beispielsweise zum Transport oder zur Lagerung.

Fig. 10 zeigt eine platzsparende, ineinander verschachtelte Anordnung mehrerer Absetzeinrichtungen 3, beispielsweise zum Transport oder zur Lagerung.

Mit Bezug auf die Zeichnungen wird nachstehend das Wirkungsprinzip der erfindungsgemäßen Versickerungsvorrichtung 1 beschrieben.

Die Versickerungsvorrichtung 1 wird zunächst bestimmungsgemäß so verlegt, dass der Boden der Absetzeinrichtung 3 und die ersten und zweiten Ebenen, die durch die Öffnungen der Öffnungsreihen 4a und 4b definiert werden, senkrecht zur Kraftrichtung der Schwerkraft verlaufen. Wie in Figur 2 gezeigt ist, wird das zu versickernde Fluid am tiefsten Punkt der Absetzeinrichtung 3 in dieselbe eingeleitet. Das eingeleitete Fluid wird in dem fluidundurchlässigen Absetzabschnitt der Absetzeinrichtung 3 aufgestaut, so dass der Wasserspiegel in der Absetzeinrichtung 3 entgegen der Kraftrichtung der Schwerkraft langsam ansteigt. Das Ansteigen des Wasserspiegels in der Absetzeinrichtung 3 wird in Figur 4 durch Pfeile symbolisiert. Durch die Einwirkung der Schwerkraft setzen sich die im Fluid enthaltenen Schwebstoffe im Absetzabschnitt am Boden der Absetzeinrichtung 3 ab. Bei Erreichen der ersten Stauhöhe läuft das in der Absetzeinrichtung 3 aufgestaute Fluid zunächst über alle Öffnungen der Öffnungsreihen 4a an beiden Seitenwänden der Absetzeinrichtung 3 gleichzeitig und gleichmäßig in das vom Strukturkörper 2 freigehaltene Volumen ab. Durch die mit dem fluiddurchlässigen Vlies 7 verkleidete Wandung des Strukturkörpers 2 versickert das zu versickernde Fluid in das umliegende Erdreich. Bei starkem Zufluss des zu versickernden Fluides, beispielsweise bei starkem Regenfall, kann es vorkommen, dass Fluid schneller in die Absetzeinrichtung 3 zuläuft, als es über die Öffnungen der Öffnungsreihen 4a ablaufen kann, so dass der Fluidpegel auch oberhalb der ersten Stauhöhe weiter ansteigt. Bei Erreichen der zweiten Stauhöhe läuft das Fluid zusätzlich über alle Öffnungen der Öffnungsreihen 4b an beiden Seitenwänden der Absetzeinrichtung 3 gleichzeitig und gleichmäßig in das vom Strukturkörper 2 freigehaltene Volumen ab. Zur Ableitung größerer Fluidmengen können, wie oben beschrieben, zusätzliche Öffnungen bzw. Öffnungsreihen vorgesehen werden.

Zum Reinigen der Versickerungsvorrichtung 1 wird ein Reinigungsgerät mit einem Spül- und Saugkopf in den Zulauf der Versickerungsvorrichtung 1 eingeführt. Zunächst wird das aufgestaute Fluid aus der Absetzeinrichtung 3 abgesaugt. Zum Entfernen des Absatzes im Absetzabschnitt wird eine Reinigungsflüssigkeit, beispielsweise Wasser, unter Hochdruck durch die Fluideintrittsöffnung in die Absetzeinrichtung 3 eingeleitet.

Die Fluideintrittsöffnung der erfindungsgemäßen Versickerungsvorrichtung 1 befindet sich wie erwähnt im Bereich des Absetzabschnitts am Boden der Absetzeinrichtung 3. Durch das Einleiten der Reinigungsflüssigkeit am tiefsten Punkt der Absetzeinrichtung 3 entstehen keine Staupunkte, an denen sich Rückstände von Schwebstoffen bilden könnten, die von der Spülströmung nicht erreicht werden. Durch die unter Hochdruck in den Absetzabschnitt eingeleitete Reinigungsflüssigkeit werden die zuvor abgesetzten Schwebstoffe zur Fluideintrittsöffnung vorzugsweise in einen Kontroll- und Reinigungsschacht gespült. Das Spülwasser einschließlich der darin enthaltenen Schwebstoffe wird abgesaugt, bevor es sich aufstaut und über die Öffnungen 4a des Überlaufabschnittes 4 in das vom Strukturkörper 2 frei gehaltene Versickervolumen überläuft. Die Absetzeinrichtung 3 kann vollständig und rückstandslos gereinigt werden, ohne dass Schmutz oder Schwebstoffe in das vom Strukturkörper 2 freigehaltene Volumen überlaufen und die Versickerleistung der Versickerungsvorrichtung 1 beeinträchtigen können.

## Patentansprüche

1. Versickerungsvorrichtung (1), vorzugsweise für ein unterirdisches zu verlegendes Rigolensystem, mit einem im Wesentlichen hohlen und zumindest abschnittsweise fluiddurchlässigen Strukturkörper (2), der dafür vorgesehen ist, ein Volumen im Erdreich freizuhalten, durch welches ein zu versickerndes Fluid, vorzugsweise Regenwasser, zur Zwischenspeicherung und Versickerung hindurchleitbar ist, mit einer in dem freigehaltenen Volumen angeordneten Absetzeinrichtung (3) zum Absetzen der im Fluid enthaltenen Schwebstoffe, mit einem vorzugsweise als Mulde, Rinne oder Senke ausgebildeten Absetzabschnitt des zu versickernden Fluides und einem Auslaufabschnitt, über den das Fluid zur Versickerung ablaufen kann, wobei der Auslaufabschnitt (4) Öffnungen aufweist, die in unterschiedlichem Abstand vom Boden der Absetzeinrichtung (3) angeordnet sind, wobei der Auslaufabschnitt (4) eine erste Reihe (4a) mit zumindest zwei Öffnungen aufweist, die in Längsrichtung der Absetzeinrichtung (3) im gleichen Abstand vom Boden der Absetzeinrichtung (3) hintereinander angeordnet sind und eine erste Ebene definieren, und wobei der Auslaufabschnitt (4) eine zweite Reihe (4b) mit Öffnungen aufweist, die in Längsrichtung der Absetzeinrichtung (3) im gleichen Abstand vom Boden der Absetzeinrichtung (3) hintereinander angeordnet sind und eine zweite Ebene definieren, die zur ersten Ebene im Wesentlichen parallel ist, **dadurch gekennzeichnet, dass** die Anzahl der jeweils eine Ebene definierenden Öffnungen mit zunehmendem Abstand vom Boden entgegen der Schwerkraftrichtung zunimmt.

2. Versickerungsvorrichtung (1) nach Anspruch 1, **dadurch gekennzeichnet, dass** der Absetzabschnitt den Boden der Absetzeinrichtung (3) bildet.

3. Versickerungsvorrichtung (1) nach Anspruch 1 oder 2, **dadurch gekennzeichnet, dass** der Absetzabschnitt im Wesentlichen fluidundurchlässig ist.

4. Versickerungsvorrichtung (1) nach einem der vorangegangenen Ansprüche, **dadurch gekennzeichnet, dass** die Öffnungen (4) mit zunehmendem Abstand vom Boden der Absetzeinrichtung (3) eine größere Öffnungsfläche aufweisen.

5. Versickerungsvorrichtung (1) nach einem der vorangegangenen Ansprüche, **dadurch gekennzeichnet, dass** die Absetzeinrichtung (3) in Längsrichtung des Strukturkörpers (2) angeordnet ist.

6. Versickerungsvorrichtung (1) nach einem der vorangegangenen Ansprüche, **dadurch gekennzeichnet, dass** die Außenseiten des Strukturkörpers (2) mit im Wesentlichen rechteckigen oder quadratischen Abdeckelementen (5) abgedeckt sind.

7. Versickerungsvorrichtung (1) nach einem der vorangegangenen Ansprüche, **dadurch gekennzeichnet, dass** die Länge des Strukturkörpers (2) im Wesentlichen gleich der Breite oder gleich einem ganzzahligen Vielfachen der Breite des Strukturkörpers (2) ist.

8. Versickerungsvorrichtung (1) nach einem der vorangegangenen Ansprüche, **dadurch gekennzeichnet, dass** die Außenseiten des Strukturkörpers (2) mit Vlies (7) verkleidet sind.

## Claims

1. Infiltration device (1), preferably for a blind drain system to be subterraneously installed, having a substantially hollow and at least in portions fluid-permeable structural body (2) which is provided for reserving a volume in the soil through which a fluid which is intended for infiltration, preferably rain water, is conductible for the purpose of intermediate storage and infiltration, having a sedimentation installation (3) for sedimentation of the suspended material contained in the fluid, which is disposed in the reserved volume, having a sedimentation portion of the fluid which is intended for infiltration, which is preferably configured as a trough, groove, or depression, and having a discharge portion by way of which the fluid may run off for infiltration, wherein the discharge portion (4) has openings which are disposed at dissimilar spacings from the base of the sedimentation installation (3), wherein the discharge portion (4) has a first row (4a) having at least two openings which in the longitudinal direction of the sedimentation installation (3) are sequentially disposed at an identical spacing from the base of the sedimentation installation (3), defining a first plane, and wherein the discharge portion (4) has a second row (4b) having openings which in the longitudinal direction of the sedimentation installation (3) are sequentially disposed at an identical spacing from the base of the sedimentation installation (3), defining a second plane which is substantially parallel with the first plane, **characterized in that** the number of the openings which in each case define one plane increases as the spacing from the base increases counter to the direction of gravity.

2. Infiltration device (1) according to Claim 1, **characterized in that** the sedimentation portion forms the base of the sedimentation installation (3).

3. Infiltration device (1) according to Claim 1 or 2, **characterized in that** the sedimentation portion is substantially impermeable to fluid.

4. Infiltration device (1) according to one of the preceding claims, **characterized in that** the openings (4) have a larger opening area, the greater the spacing from the base of the sedimentation installation (3).

5. Infiltration device (1) according to one of the preceding claims, **characterized in that** the sedimentation installation (3) is disposed in the longitudinal direction of the structural body (2).

6. Infiltration device (1) according to one of the preceding claims, **characterized in that** the external sides of the structural body (2) are covered by substantially rectangular or square cover elements (5).

7. Infiltration device (1) according to one of the preceding claims, **characterized in that** the length of the structural body (2) is substantially equal to the width or equal to an integer multiple of the width of the structural body (2).

8. Infiltration device (1) according to one of the preceding claims, **characterized in that** the external sides of the structural body (2) are cladded with a non-woven material (7).

## Revendications

1. Dispositif d'infiltration (1), de préférence pour un système de rigoles devant être posé sous la terre, comprenant un corps structurel (2) essentiellement creux et au moins en partie perméable aux fluides, qui est prévu pour conserver un volume dans la terre à travers lequel peut être conduit un fluide d'infiltration, de préférence de l'eau de pluie pour le stockage intermédiaire et l'infiltration, comprenant un dispositif de sédimentation (3) disposé dans le volume conservé pour séparer les matières en suspension contenues dans le fluide, avec une portion de sédimentation réalisée de préférence sous forme de cuve, de rainure ou de puits pour le fluide d'infiltration et une portion d'écoulement par le biais de laquelle le fluide peut s'écouler pour l'infiltration, la portion d'écoulement (4) présentant des ouvertures qui sont disposées à une distance différente du fond du dispositif de sédimentation (3), la portion d'écoulement (4) présentant une première rangée (4a) avec au moins deux ouvertures qui sont disposées dans la direction longitudinale du dispositif de sédimentation (3) à la même distance du fond du dispositif de sédimentation (3) l'une derrière l'autre et qui définissent un premier plan et la portion d'écoulement (4) présentant une deuxième rangée (4b) d'ouvertures qui sont disposées dans la direction longitudinale du dispositif de sédimentation (3) à la même distance du fond du dispositif de sédimentation (3) l'une derrière l'autre et qui définissent un deuxième plan qui est essentiellement parallèle au premier plan, **caractérisé en ce que** le nombre des ouvertures définissant à chaque fois un plan augmente avec l'augmentation de la distance au fond dans le sens opposé à la force de gravité.

2. Dispositif d'infiltration (1) selon la revendication 1, **caractérisé en ce que** la portion de sédimentation forme le fond du dispositif de sédimentation (3).

3. Dispositif d'infiltration (1) selon la revendication 1 ou 2, **caractérisé en ce que** la portion de sédimentation est essentiellement imperméable aux fluides.

4. Dispositif d'infiltration (1) selon l'une quelconque des revendications précédentes, **caractérisé en ce que** les ouvertures (4) présentent une surface d'ouverture de plus en plus grande avec l'augmentation de la distance au fond du dispositif de sédimentation (3).

5. Dispositif d'infiltration (1) selon l'une quelconque des revendications précédentes, **caractérisé en ce que** le dispositif de sédimentation (3) est disposé dans la direction longitudinale du corps structurel (2).

6. Dispositif d'infiltration (1) selon l'une quelconque des revendications précédentes, **caractérisé en ce que** les côtés extérieurs du corps structurel (2) sont recouverts avec des éléments de recouvrement (5) essentiellement rectangulaires ou quadrilatéraux.

7. Dispositif d'infiltration (1) selon l'une quelconque des revendications précédentes, **caractérisé en ce que** la longueur du corps structurel (2) est essentiellement égale à la largeur ou égale à un multiple entier de la largeur du corps structurel (2).

8. Dispositif d'infiltration (1) selon l'une quelconque des revendications précédentes, **caractérisé en ce que** les côtés extérieurs du corps structurel (2) sont habillés d'un non-tissé (7).
